Europäisches Patentamt

European Patent Office

Office européen des brevets

(19)

(11) Veröffentlichungsnummer: **0 380 671**
**A1**

(12) **EUROPÄISCHE PATENTANMELDUNG**
**veröffentlicht nach Art. 158 Abs. 3**
**EPÜ**

(21) Anmeldenummer: 88909240.9

(22) Anmeldetag: 26.07.88

(86) Internationale Anmeldenummer:
PCT/SU88/00149

(87) Internationale Veröffentlichungsnummer:
WO 90/00942 (08.02.90 90/04)

(51) Int. Cl.⁵: **B21B 27/02**

(43) Veröffentlichungstag der Anmeldung:
08.08.90 Patentblatt 90/32

(84) Benannte Vertragsstaaten:
BE DE FR GB IT

(71) Anmelder: VSESOJUZNY ZAOCHNY
POLITEKHNICHESKY INSTITUT
ul. Pavla Korchagina, 22
Moscow, 129805(SU)

(72) Erfinder: PLAKHTIN, Vladimir Dmitrievich
ul. 16 Parkovaya, 55-1-95
Moscow, 105523(SU)
Erfinder: GRISHANOV, Alexei Georgievich
ul. Stroitelei, 6-25 Moskovskaya obl.
Ljubertsy, 140006(SU)
Erfinder: LIPUKHIN, Jury Viktorovich
pl. Metallurgov, 5-15 Vologodskaya obl.
Cherepovets, 162606(SU)
Erfinder: DANILOV, Leonid Ivanovich
ul. Vereschagina, 51-8 Vologodskaya obl.
Cherepovets, 162606(SU)
Erfinder: IVODITOV, Albert Nikolaevich
pl. Metallurgov, 5-13 Vologodskaya obl.
Cherepovets, 162606(SU)
Erfinder: ALJUSHIN, Boris Alexandrovich
pl. Metallurgov, 5-11 Vologodskaya obl.

Cherepovets, 162606(SU)
Erfinder: PONOMAREV, Viktor Ivanovich
ul. Marata, 12-63 Donetskaya obl.
Kramatorsk, 343901(SU)
Erfinder: BOBUKH, Ivan Alexeevich
ul. Parkovaya, 4a-14 Donetskaya obl.
Kramatorsk, 343900(SU)
Erfinder: TOMASHEV, Leonid Alexandrovich
ul. Lipetskaya, 24-2-311
Moscow, 115404(SU)
Erfinder: SOROKIN, Alexandr Mikhailovich
pr. Pobedy, 206-13 Vologodskaya obl.
Cherepovets, 162624(SU)
Erfinder: SAKHAROV, Oleg Grigorievich
ul. Vrachebnaya, 11a-57 Donetskaya obl.
Kramatorsk, 343907(SU)
Erfinder: KANEV, Nikolai Galaktionovich
ul. Arkhangelskaya, 62-143 Vologodskaya
obl.
Cherepovets, 162601(SU)

(74) Vertreter: Patentanwälte Beetz sen. - Beetz
jun. Timpe - Siegfried - Schmitt-Fumian-
Mayr
Steinsdorfstrasse 10
D-8000 München 22(DE)

(54) ROLLE.

(57) A roll comprises an axle (1) with a driven and an idle neck (2, 3) and a shell (4) rigidly secured on the shaft (1). The shaft (1) is provided with trapezoidal protrusions (6) evenly spaced along its circumference with their height regularly decreasing in the direction from the driven neck (2) to the idle one (3).

FIG.1

WALZWERKSWALZE

## Gebiet der Technik

Die Erfindung bezieht sich auf das Walzwerkswesen und betrifft insbesondere eine Walzwerkswalze

## Zugrundeliegender Stand der Technik

Diese Erfindung kann in sämtlichen Längswalzwerken ihren Eingang finden.

Derzeit sind infolge einer Werdrillung der Arbeitswalzen bei der Übertragung des Drehmomentes die Qualität des Walzgutes, die Walzenfestigkeit und die Standzeit der Lager nicht hoch genug.

Beim Greifen des Streifens durch die Walzen und unter Einwirkung des Drehmomentes findet eine Walzenverdrillung statt, die eine ungleichmäßige Verteilung der Reibungskräfte zwischen den Arbeits- und Stützwalzen über deren Berührungsfläche mit sich bringt. Dies bewirkt das Aufkommen schwenkender Momente, die auf die Walzen in horizontaler Ebene wirken und deren relative Schrägstellung zur Folge haben.

Hierbei entstehen an der Berührungsfläche der Arbeitswalzen mit den Stützwalzen unter Wirkung der Walzkraft hohe Axiallasten, durch welche die Walzenlager schnell kaputt gehen.

Auf Grund einer Schrägstellung der Walzen wird die richtige geometrische Form des Walzspaltes entstellt, entstehen eine quer verlaufende Dickenunterschiedlichkeit und eine Unebenheit der zu walzenden Streifen.

Es ist eine Walzwerkswalze (SU, A, 407438) bekannt, die eine Achse mit Zapfen, von denen der eine Zapfen mit einem Antrieb für dessen Drehung (Antriebszapfen) kinematisch gekoppelt ist, und eine an der Achse starr befestigte Bandage aufweist.

Die Übertragung des Drehmomentes von der Achse auf die Bandage erfolgt über eine Schicht aus einem harten feinkörnigen Pulver in der Eigenschaft von Mikrodübeln,

- 2 -

die über die Verbindungsfläche der Bandage mit der Achse gleichmäßig verteilt sind. Dadurch verbessert sich die Festigkeit der Verbindung zwischen Bandage und Achse sowie die Zuverlässigkeit der Walze insgesamt.

Infolge der starren Verbindung der Achse mit der Bandage wird die letztere jedoch beim Greifen des Streifens verdreht. Hierbei findet deren Verformung statt, und in ihrem Werkstoff bauen sich zusätzliche Schubspannungen auf, wodurch die Festigkeit der Bandage im wesentlichen beeinträchtigt wird.

Hinzu kommt, daß sich onfolge der Verdrehung der Bandage Umfangsgeschwindigkeiten der Arbeitswalze über ihre Länge ungleichmäßig verteilen. Währenddessen bleiben die Umfangsgeschwindigkeiten der Stützwalze in deren allen Querschnitten über die Länge der Berührung mit der Bandage der Arbeitswalze gleichmäßig verteilt, da die Stützwalze keine Verdrillung erfährt.

Dieses Verhältnis der Umfangsgeschwindigkeiten der Arbeits- und der Stützwalze zueinander führt eine ungleichmäßige Verteilung der Reibungskräfte über die Länge deren Kontaktes herbei. Als Folge hiervon findet eine Versetzung der Resultierenden der Kontaktreibungskräfte relativ zu der Walzachse statt, und auf die Walzen beginnen schwenkende Momente in waagerechter Ebene zu wirken. Hierbei bleibt die Stützwalze unter Einfluß der Reibungskräfte an der Berührungsstelle zwischen deren Einbaustükken und dem Spurlager der Walzenanstellvorrichtung in geschwenktem Zustand bis zur Beendigung des Walzens des Streifens gehalten.

Zugleich nimmt die Arbeitswalze unter Einwirkung der horizontalen Reaktionskomponente der Stützwalze auf die Arbeitswalze eine Stellung ein, die dem Gerüst parallel verlauft.

Als Ergebnis hiervon ist zwischen der Arbeits- und der Stützwalze eine anhaltende Schrägstellung feststellbar, die während des Walzens des gesamten Streifens erhalten bleibt. Diese Schrägstellung verursacht das Aufkommen von Axiallasten, die auf die Walzenlager wirken und deren Bruch begünstigen sowie deren Standzeit verkürzen.

Überdies versetzt sich infolge der Schrägstellung der Stütz- und der Arbeitswalze die Resultierende des Walzdruckes relativ zu der Walzachse und folglich die Linie, an welcher die Walzdruckkraft angreift. Als Folge hiervon entstehen eine quer- und eine längsverlaufende Dickenunterschiedlichkeit des zu walzenden Streifens, die im wesentlichen die Qualität des Walzgutes beeinträchtigt.

Beim Greifen des Streifens durch die Walzen sowie bei anderen Übergangsprozessen wie Nichtübereinstimmung der Drehgeschwindigkeit der Walzen in den benachbarten Gerüsten, eine ungleichmäßige Temperaturverteilung im Streifen und andere Vorgänge, die mit einer Änderung des Walzmomentes der Walzen zusammenhängen, führen die Walzen komplizierte Schwingbewegungen im Raum aus. Diese Schwingbewegungen treten als Ursache für eine regelmäßige Welligkeit und Unebenheit des Streifens auf.

Dadurch verschleichtert sich die Qualität des Walzgutes und erhöht sich die Menge von Walzabfällen.

Um die Verdrehung der Bandage zu verringern, muß der Antrieb an beiden Seiten der Walze vorgesehen sein, was jedoch den Investionsaufwand für die Ausrüstungen und den Aufbau eines Walzwerkes erhöht.

Es ist eine Walzwerkswalze (SU, A, 1097402) bekannt, die eine Achse mit einem treibenden und einem nicht treibenden Zapfen sowie einem kegeligen Walzenring auf der Seite des treibenden Zapfen und eine auf der Achse sitzende Bandage enthält.

Die Übertragung des Drehmomentes von der Achse auf die Bandage geschieht über Stifte, die an den beiden Stirnseiten der Bandage in der Achse angeordnet und regelmäßig an deren Kreislinie verteilt sind. Hierbei

- 4 -

ist die Steifigkeit der Stifte an der Seite des treibenden Zapfens geringer als die der Stifte an der Seite des nicht treibenden Zapfens.

Nach dem Angriff des Drehmomentes an dem treibenden Zapfen der Walze teilt sich diese in zwei Kraftflüsse ein, die auf die an beiden Stirnseiten der Bandage angebrachten Stifte wirken. Dadurch nimmt die Verdrehung der Bandage nahe den Stirnseiten ab. Im mittleren Teil der Bandage bleibt hingegen die Verdrehung erheblich. Dies zieht hohe Schubspannungen im mittleren Teil der Bandage nach sich und beeinträchtigt ihre Festigkeit.

Hinzu kommt weiter, daß an den Stellen der Anbringung der Stifte an der Bandage Spannungskonzentratoren entstehen, die sich recht nachteilig auf die Festigkeit der Bandage auswirken.

Bei dieser konstruktiven Auslegung verteilen sich die Umfangsgeschwindigkeiten der Arbeitswalze während der eingangs erwähnten Übergangsprozesse des Walzens ungleichmäßig über die Länge der Bandage. Dies führt zu einer unregelmäßigen Dehnung des Streifens in seiner Breite, wodurch sich hin und wieder eine Unebenheit bildet ind die Qualität des Walzgutes beachtlich zurückgeht. Das ist eben die Aufgabe, die durch die Erfindung zu lösen ist.

Offenbarung der Erfindung

Der Erfindung liegt die Aufgabe zugrunde, eine Walzwerkswalze zu schaffen, deren Achse konstruktiv so ausgeführt ist, daß durch Vermeiden einer Verdrehung der Bandage eine bessere Qualität des Walzgutes erzielt und eine erhöhte Festigkeit der Bandage der Arbeitswalze sichergestellt werden.

Diese Aufgabe ist dadurch gelöst werden, daß bei einer Walzwerkswalze, die eine Achse mit Zapfen, von welchen der eine Zapfen mit einem Antrieb für dessen Drehbewegung kinamatisch gekoppelt ist, und eine an der Achse

- 5 -

starr befestigte Bandage aufweist, erfindungsgemäß an der Achse an deren Kreislinie trapezförmige Erhebungen gleichmäßig vorgesehen sind, deren Höhe von dem treibenden Zapfen bis hin zum nicht treibenden Zapfen zügig abnimmt.

Diese konstruktive Gestaltung der Erhebungen der Achse sichert gleiche Schwenkwinkel der Außenfläche ihrer Erhebungen, die mit der Innenfläche der Bandage über die ganze Länge ihrer Berührung verbunden sind.

Dies gewährleistet seinerseits eine gleichmäßige Verteilung der Umfangsgeschwindigkeiten in jedem Punkt der Oberfläche der Bandage über die gesamte Länge deren Berührung mit der Stützwalze.

Es wird auch jeweilig eine gleichmäßige Verteilung der Reibungskräfte über die Länge der Berührung der Arbeitswalze mit der Stützwalze sichergestellt. Dies begegnet eben einer Verdrehung der Bandage, behebt Schubspannungen in ihrem Werkstoff und trägt zur Festigkeit der Bandage bei.

Hinzu kommt, daß durch die gleichmäßige Verteilung der Umfangsgeschwindigkeiten über die Länge der Bandage eine unregelmäßige Dehnung des Streifens in dessen Breite verhindert und seine Ebenheit verbessert wird, so daß sich die Qualität des Walzgutes beachtlich erhöht.

Es ist hierbei zweckmäßig, daß die Höhe jeder trapezförmigen Erhebung auf der Seite des treibenden Zapfens so gewählt wird, daß gleichmäßige Tangentialkräfte über die Länge der Verbindung der Erhebungen mit der Bandage sichergestellt werden.

Im vorliegenden Fall wird eine Verdrehung der Bandage vollständig vermieden und eine gleichmäßige Verteilung der Reibungskräfte zwischen des Arbeits- und der Stützwalze über die Länge ihres Kontaktes erreicht. Winkel der Schrägstellung der Walzen und die Axiallasten der Walzen werden auf ein Minimum reduziert, die Qualität des Walzgutes verbessert sich weiter und die Festigkeit der Bandage der Arbeitswalze erhöht sich.

Demnach wird dank der Erfindung die Qualität des Walzgutes verbessert und die Festigkeit der Bandage der Arbeitswalze erhöht.

Kurze Beschreibung der Zeichnungen

Zum bessern Verständnis der Erfindung ist im folgenden deren konkretes Ausführungsbeispiel unter Bezugnahme auf die beigelegten Zeichnungen angeführt, in denen zeigt

Fig. 1 schematisch eine gemäß der Erfindung ausgeführte Walze, eine Gesamtansicht mit einem Ausriß einer trapezförmigen Erhebung,

Fig. 2 einen Schnitt nach der Linie II - II der Fig. 1,

Fig. 3 einen Schnitt nach der Linie III - III der Fig. 1,

Fig. 4 einen Abschnitt der Achse mit trapezförmigen Erhebungen, eine Axonometrie, und

Fig. 5 eine Ansicht nach einem Pfeil A der Fig. 1, mit einem Ausriß.

Bevorzugte Ausführungsform der Erfindung

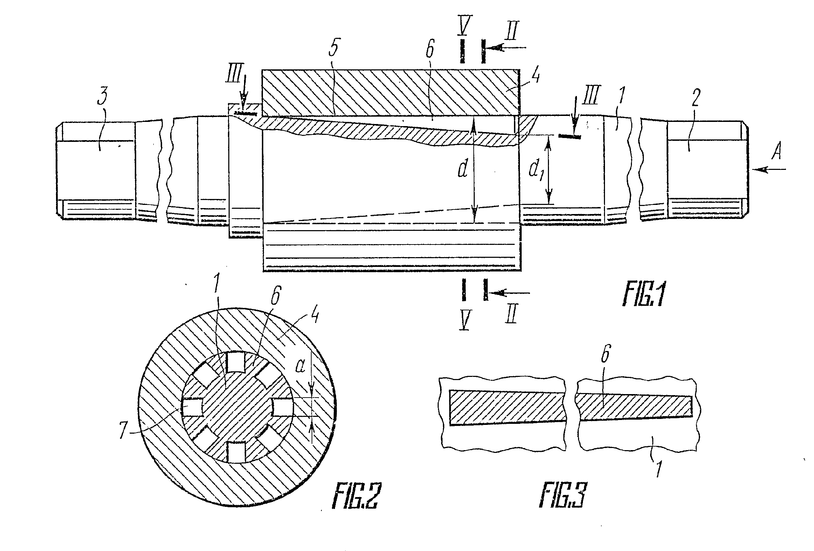

Die Walzwerkswalze enthält eine Achse 1 (Fig. 1) mit Zapfen 2 und 3, von denen der eine Zapfen (im vorliegenden Fall der Zapfen 2) mit einem Antrieb (nicht gezeigt) zur Drehbewegung der Walze kinematisch verbunden ist, und eine an der Achse 1 starr befestigte Bandage (im weiteren heißt der mit dem Antrieb kinematisch gekoppelte Zapfen 2 Antriebszapfen 2, und der Zapfen 3 Nichtantriebszapfen 3).

Für die Fixierung der Bandage 4 an der Achse 1 während der Übertragung des Drehmomentes kann beispielsweise eine Schicht aus hartem feinkörnigem Pulver 5 verwendet werden. Das Pulver 5 wird zuvor auf die Achse 1 aufgestäubt, die Bandage 4 wird erhitzt und warm auf die Achse 1 aufgesetzt.

- 7 -

Nach der Kühlung der Bandage 4 an der Achse 1 und deren Zusammenschrumpfen entsteht eine feste Verbindung der Bandage 4 mit der Achse 1, die die Übertragung hoher Drehmomente sicherstellt.

Es bieten sich aber auch andere Verfahren für die Befestigung der Bandage 4 an der Achse 1.

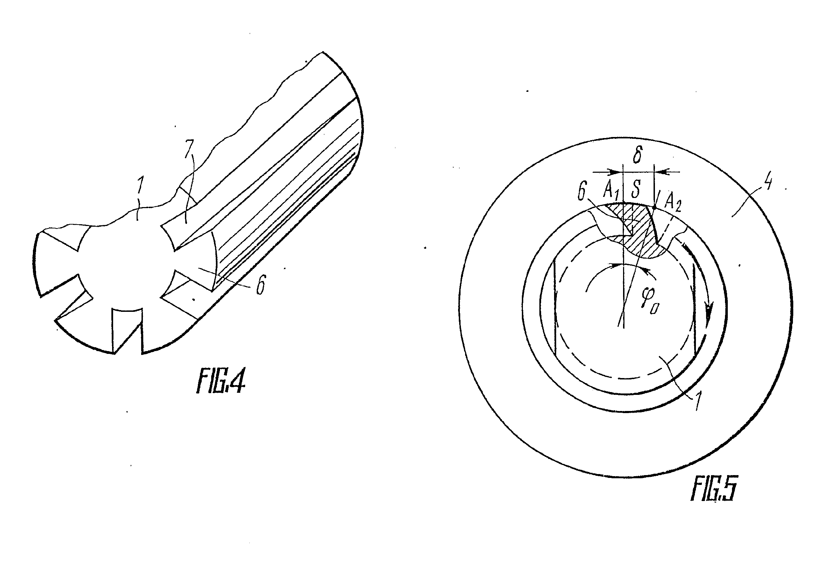

An der Achse 1 sind gleichmäßig an ihrer Kreislinie trapezförmige Erhebungen 6 vorgesehen, die vom Antriebszapfen 2 bis hin zum Nichtantriebszapfen 3 zügig nach ihrer Höhe abnehmen. Die Erhebungen 6 können, z.B., durch Fräsen von Längsnuten 7 (Fig. 2) gleichbleibender Breite a an der Achse 1 in einem Winkel zu ihrer Erzeugenden hergestellt werden. Jede trapezförmige Ergebung 6 ist so ausgeführt, daß gleichmäßige Tangentialkräfte über die Länge der Verbindung der Erhebungen 6 mit der Bandage 4 gewährleistet werden.

Dies erreicht man durch eine veränderliche Steifigkeit der Erhebungen 6 über ihre Höhe. Jede Erhebung 6 (Fign. 3 und 4) stellt einen Konsolträger veränderlichen Querschnittes mit dessen Befestigung an der Achse 1 dar.

Die Walzwerkswalze hat folgende Wirkungsweise.

Bei der Übertragung eines Drehmomentes $M_k$ vom einem Motor (nicht gezeigt) an den Antriebszapfen 2 wird die Achse 1 auf ihrem Abschnitt der Verbindung mit der Bandage 4 verdreht. Infolge dessen, daß die Außenflächen der trapezförmigen Erhebungen 6 mit der inneren Sitzfläche der Bandage 4 starr verbunden sind, biegen sich die trapezförmigen Erhebungen 6 (wie das in Fig. 5 dargestellt), indes deren Kontakt mit der Verbindungsfläche der Bandage 4 ungestört bleibt.

Die Biegung $\overset{\wedge}{c}$ der Erhebungen 6 hängt von dem Winkel $\varphi_o$ der Verdrehung der Achse 1 relativ zu der Bandage 4 in ihrem infrage kommenden Querschnitt ab. Dank der konstruktiven Ausführung der trapezförmigen Erhebungen 6 erreicht man eine Gleichheit ihrer Biegung $\overset{\wedge}{d}$ und ihrer Tangentialverschiebungen S aus dem Punkt $A_1$ zum Punkt

A$_2$ während der Verdrehung der Achse 1 und beim Fehlen der Biegung der Erhebungen 6 (in Fig. 5 gestrichelt) an der Kreislinie der Verbindung mit der Bandage 4 in einem beliebigen Querschnitt der Achse 1.

Hierbei werden über die gesamte Länge der Verbindung der Aussenflchen der Erhebungen 6 mit der Bandage 4 gleichmäßige Tangentailkräfte auf die Bandage 4 übertragen, so daß einer Verdrehung der Bandage 4 begegnet wird.

Dank dem Vermeiden einer Verdrehung der Bandage 4 werden Schubspannungen im Werkstoff der Bandage 4 verhindert, und deren Festigkeit erhöht sich, so daß sich die Festigkeit der Walze insgesamt verbessert.

Sichergestellt wird eine gleichmäßige Verteilung der Reibungskräfte über die Kontaktlänge zwischen der Arbeits- und der Stützwalze (die Stützwalze nicht dargestellt), die Axiallasten an der Berührungsstelle der Arbeitswalze mit der Stützwalze und mit dem zu walzenden Streifen gehen zurück.

Als Folge hiervon verlängert sich die Standzeit der Walzenlager.

Beim Greifen des Streifens durch die Walzen werden komplizierte Schwingbewegungen (Schwenkungen) der Arbeits- und der Stützwalzen im Raum während der Übergangsprozesse ausgeschlossen, wodurch die Welligkeit und die Verwerfung des Streifens verringert werden, und sich dessen Ebenheit sowie die Qualität des Walzgutes verbessert. Es entfällt die Notwendigkeit für den Einsatz des Antriebes der Walze an deren beiden Seiten, und der Investionsaufwand für die Errichtung eines Walzwerkes wird eingespart.

Demzufolge werden durch die Anwendung der vorliegenden Erfindung die Festigkeit der Bandage der Arbeitswalze erhöht, die Standzeit der Lager verlängert und die Qualität des Walzgutes verbessert.

## Gewerbliche Anwendbarkeit

Am besten ist die Erfindung für Breitbandwalzwerke zum Warm- und Kaltwalzen geeingnet.

Bei der Anwendung der vorliegenden Erfindung verbessert sich die Ebenheit der zu walzenden Streifen um 20 bis 25 %, die Standzeit der Walzenlager verlängert sich um das 2,5 bis 3,0fache und die Festigkeit der Walzen erhöht sich um das 1,5 bis 2,0fache.

PATENTANSPRÜCHE

1. Walzwerkswalze, enthaltend eine Achse (1) mit Zapfen (2, 3), von denen der eine Zapfen mit .einem Antrieb für dessen Drehbewegung kinematisch gekoppelt ist, und eine an der Achse (1) starr befestigte Bandage (4), dadurch g e k e n n z e i c h n e t, daß an der Achse (1) an deren Kreislinie trapezförmige Erhebungen (6) gleichmäßig vorgesehen sind, deren Höhe von dem Antriebszapfen (2) bis hin zum Nichtantriebszapfen (3) zugig abnimmt.

2. Walzwerkswalze nach Anspruch 1, dadurch g e - k e n n z e i c h n e t, daß die Höhe jeder trapezförmigen Erhebung (6) auf der Seite des Antriebszapfens (2) so gewählt wird, daß gleichmäßige Tangentialkräfte über die Länge der Verbindung der Erhebungen (6) mit der Bandage (4) sichergestellt werden.

FIG.1

FIG.2

FIG.3

EP 0 380 671 A1

FIG.4

FIG.5

EP 0 380 671 A1

# INTERNATIONAL SEARCH REPORT

International Application No PCT/SU 88/00149

## I. CLASSIFICATION OF SUBJECT MATTER (If several classification symbols apply, indicate all) [6]

According to International Patent Classification (IPC) or to both National Classification and IPC

$IPC^4$ — B 21 B 27/02

## II. FIELDS SEARCHED

### Minimum Documentation Searched [7]

| Classification System | Classification Symbols |
|---|---|
| $IPC^4$ | B 21 B 27/00, 27/02 |

### Documentation Searched other than Minimum Documentation to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU,A3,407438 (INOFIRMA HITACHI METALS LTD.) 27 March 1974 (27.03.74), cited in the description | 1 |
| A | SU,A1,417198 (MOSKOVSKY INSTITUT STALEI I SPLAVOV) 13 September 1974(13.09.74) see the claims, figure 1 | 1 |
| A | SU,A1,435022 (MOSKOVSKY INSTITUT STALEI I SPLAVOV) 18 November 1974(18.11.74) see the claims, fig.2 | 1 |
| A | SU,A1,1097402 (VSESOJUZNY ZAOCHNY POLITEKHNICHESKY INSTITUT) 15 June 1984 (15.06.84) see the claims, figure 1 | 1 |
| A | SU,A1,1100018 (MOSKOVSKY INSTITUT STALEI I SPLAVOV) 30 June 1984 (30.06.84) see the claims, figure 1 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 21 March 1989 (21.03.89) | 19 April 1989 (19.04.89) |

| International Searching Authority | Signature of Authorized Officer |
|---|---|
| ISA/SU | |

**FURTHER INFORMATION CONTINUED FROM THE SECOND SHEET**

---

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers ............. because they relate to subject matter not required to be searched by this Authority, namely:

2.☑ Claim numbers ...2..., because they relate to parts of the international application that do not comply with the prescribed requirements to such an extent that no meaningful international search can be carried out, specifically:

This claim is not clear in respect of choosing the height of the trapezoidal protrusion (6)

3.☐ Claim numbers.......... because they are dependent claims and are not drafted in accordance with the second and third sentences of PCT Rule 6.4(a).

---

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

**Remark on Protest**

☐ The additional search fees were accompanied by applicant's protest.

☐ No protest accompanied the payment of additional search fees.

---

Form PCT/ISA/210 (supplemental sheet (2)) (January 1985)